# EUROPÄISCHE PATENTSCHRIFT

(11) **EP 1 042 713 B1**
(45) Veröffentlichungstag und Bekanntmachung des Hinweises auf die Patenterteilung: **04.08.2004**
(21) Anmeldenummer: 99953870.5
(22) Anmeldetag: 18.10.1999
(51) Int. Cl.: G06F 3/023, G09B 21/00

(54) **VERFAHREN ZUR ÜBERGABE VON ZEICHEN INSBESONDERE AN EINEN COMPUTER UND EINGABEVORRICHTUNG UNTER EINSATZ DIESES VERFAHRENS**
METHOD FOR TRANSFERRING CHARACTERS ESPECIALLY TO A COMPUTER AND AN INPUT DEVICE WHICH FUNCTIONS ACCORDING TO THIS METHOD
PROCEDE DE TRANSFERT DE CARACTERES EN PARTICULIER A UN ORDINATEUR, ET DISPOSITIF D'ENTREE FONCTIONNANT SELON CE PROCEDE

(30) Priorität: 19.10.1998 DE 19849515
(43) Veröffentlichungstag der Anmeldung: 11.10.2000
(73) Patentinhaber: Wergen, Gerhard, 90513 Zirndorf (DE)
(72) Erfinder: WERGEN, Gerhard, D-90513 Zirndorf (DE); FRANZ, Klaus, D-90455 Nürnberg (DE)
(74) Vertreter: Führing, Dieter
(86) Internationale Anmeldenummer: PCT/EP1999/007880
(87) Internationale Veröffentlichungsnummer: WO 2000/023870

(56) Entgegenhaltungen:
- WO-A-99/46563
- FR-A- 2 751 442
- GB-A- 1 475 886
- GB-A- 2 145 257
- US-A- 5 543 818

## Beschreibung

Die Erfindung betrifft ein Verfahren gemäß dem Oberbegriff des Anspruches 1 und eine Eingabevorrichtung gemäß dem Oberbegriff des Anspruches 5, wie sie aus der GB 1 475 886 entnehmbar sind, auf die unten noch näher eingegangen wird.

Für Sonderfälle der Bedienung von Fertigungsanlagen oder von Meßgeräten trifft man zuweilen auf eine Eingabevorrichtung mit einem Steuerknüppel als Ersatz für die Funktion der (auf heutigen Standardtastaturen enthaltenen) vier Cursortasten, um eine Marke auf einem Bildschirm in ein bestimmtes Feld zu manövrieren und dort dann mittels einer weiteren Taste ("ENTER") die darin angezeigte Operation auszulösen. Üblicher ist heute allerdings das Manövrieren auf dem Bildschirm mittels der sog. Maus, mit Betätigung ihres Tastschalters zum Auslösen von Funktionen bei Erreichen eines bestimmten Feldes in der Bildschirmdarstellung. So kann die herkömmliche Tastatur gemäß der gattungsbildenden Vorveröffentlichung dadurch ersetzt werden, daß ihr Zeichenvorrat auf dem Bildschirm des anzusteuernden Computers dargestellt und zur Zeichenübergabe an den Computer das jeweilige Zeichen (dem Tastenanschlag auf der Tastatur entsprechend) mit einem Mauszeiger aktiviert wird. Aber das gezielte Anfahren einer bestimmten Tastendarstellung kann im Gegensatz zur manuellen direkten Tastaturbedienung nicht "blind" erfolgen und dauert deshalb viel zu lang, ganz abgesehen von der großen Fehlerhäufigkeit aufgrund ungenauer Ansteuerung des gerade gewünschten Elementes bei nur kleiner Darstellung auf dem Bildschirm. Außerdem ist von Nachteil, daß solch eine Eingabe am Bildschirm für jedes Benutzerprogramm eine softwaremäßige Anpassung erfordert, während eine Tastatur als programmunabhängige Hardware an jeden Arbeitsplatzcomputer angeschlossen werden kann.

Die aus der eingangs zitierten GB 1 475 886 entnehmbaren gattungsgemäßen Maßnahmen betreffen eine Dateneingabevorrichtung, die von einem Soldaten auf dem Gefechtsfeld neben seiner dort auch anderweitigen Inanspruchnahme wahlweise mit nur der rechten oder mit nur der linken Hand bedienbar sein soll. Dafür greift er diese Einrichtung rückseitig so mit drei Fingern einer Hand, daß er mit deren Daumen auf der Vorderseite einen Richtungsschalter zur Zeichenauswahl und danach auf der Rückseite einen ENTER-Knopf zur Eingabe des ausgewählten Zeichens betätigen kann. Die Zeichenauswahl erfolgt auf zwei Anzeigetafeln mit kartesischen Matrixdarstellungen für die alphaischen (6x5) bzw. für numerische und Sender-Zeichen (5x3) durch den Richtungsschalter, nachdem der Soldat mit einem weiteren Schalter auf der Vorderseite zunächst einmal eine Auswahl dahingehend getroffen hat, aus welcher dieser beiden Tafeln er das nächste Zeichen auswählen will. Sodann muß er den Richtungsschalter von einer neutralen Ruheposition her, die zugleich eine Leerzeichen-Eingabe bewirken soll und eine Leuchtanzeige im Mittenbereich (aber nicht im Zentrum) der jeweiligen Tafel hervorruft, gezielt in einer der beiden zueinander orthogonalen Richtungen oder in eine diagonale Richtung betätigen und nach Maßgabe seiner Zeichenauswahl über eine definierte Zeitspanne festhalten. Währenddessen zählen ein Zeilen- oder / und ein Spaltenzähler hoch, deren Zählergebnisse schließlich angeben, um wie viele Positionen in der jeweiligen Koordinatenrichtung sich die Leuchtanzeige aus ihrer Ruheposition heraus auf ein dadurch zur späteren Eingabe ausgewähltes aus dem auf der ausgewählten Tafel angezeigten Vorrat an Zeichen verschieben soll. Eine vorgegebene Begrenzung des Zählvolumens stellt sicher, daß auch durch irrtümlich zu lange Betätigung des Richtungsschalters der mit Zeichen belegte Bereich der ausgewählten Tafel nicht verlassen wird, d.h. die Zeichenauswahl läuft dann bis zur letzten in der Matrix mit einem Zeichen belegten Position durch. Wenn so die Leuchtmarkierung schließlich zum gewünschten Zeichen manövriert wurde, darf der Richtungsschalter auf der Vorderseite nicht mehr betätigt werden. Jetzt wird statt dessen der ENTER-Schalter auf der Rückseite betätigt, um das ausgewählte Zeichen an einen Computer zu übergeben und zugleich durch einen Zähler-Reset die Leuchtmarkierung auf ihre Ruheposition in der momentan ausgewählten Tafel zurückzuführen. Es ist unverständlich, daß der Soldat im Feld eine derartige Eingabevorrichtung hinreichend fehlerfrei bedienen können soll - für den motorisch oder durch Amputation von Gliedmaßen Schwerstbehinderten ist eine derart umständliche Betätigungsfolge für zunächst die Vorgabe eines Zeichenvorrats, sodann darin die Zeichenauswahl über einen Richtungsschalter mit Schrittzähler und schließlich die Zeichenausgabe über nacheinander definiert zu bedienende unterschiedliche Schalter derart indiskutabel, daß daraus für diese benachteiligte Anwendergruppe überhaupt keine Anregung entnehmbar ist; zumal daraus erst recht noch kein Hinweis darauf herleitbar ist, mit der Zeichenauswahl schon gleich auch eine Zeichenübergabe zu generieren.

Im Ergebnis nicht weniger ungünstig liegen die Verhältnisse bei der FR 2 751 442 A mit ihrer als 5x4-Matrix ausgelegten Telefontastatur verminderten Zeichenumfangs neben einer Anzeigefläche, auf der kontextabhängig nur dargestellt ist, welche Zeichen tatsächlich momentan über die Tastatur auswählbar sind. Für den Fall einer Feldmatrixdarstellung mit 3x3 Positionen je Feld bewirkt ausgehend von einer bestimmten Taste eine bestimmte Tastenbetätigungsfolge zunächst das Öffnen eines 3x3-Feldes und darin die Auswahl der mittleren Position, sodann abhängig von einer definierten weiteren Betätigung der Tastatur das Öffnen eines weiteren 3x3-Feldes und darin wieder die Auswahl der mittleren Position, und die zusätzliche Betätigung einer anderen Taste schließlich die Auswahl des Zeichens, dessen Lage im zuletzt geöffneten Feld der geometrischen Folge der Tastensprünge etwa entspricht. Solch eine definierte aber von Fall zu Fall unterschiedliche Betätigungsfolge direkt auf der Tastatur kann jedenfalls von einem motorisch Behinderten ersichtlich ebenfalls nicht erwartet werden. Insoweit auf die Belange auch dieser Nutzergruppe abgestellt wird, kann deshalb auch von dieser Eingabevorrichtung, die auf der Tastatur eine Sprungfolge entsprechend der graphischen Zeichenverteilung in der momentanen Displaydarbietung fordert und deshalb schon keine "blinde" Betätigungsfolge zuläßt, keinerlei Anregung dahingehend ausgehen, sie möglicherweise mit der vorstehend beschriebenen Zeichengenerierung durch den Soldaten im Feldeinsatz irgendwie zu kombinieren.

Die Funktion der aus der GB 2 145 257 A bekannten ähnlichen Einrichtung beruht darauf, die Zeichen jeweils mittels sukzessiver Selektierung erst in einer Hauptfläche und danach in Teilflächen zu suchen. Die schließlich getroffene Zeichenauswahl muß auf der Anzeige mittels einer zusätzlichen Tastenbetätigung erst noch durch Markieren bestätigt werden, ehe die Zeichenausgabe automatisch oder manuell eingeleitet werden kann.

Auch die US 5 008 847 offenbart ein Zeicheneingabeverfahren unter Verwendung einer Aufteilung der Darstellung des Zeichenvorrates auf unterschiedliche Felder, in denen nun das aufgefundene Zeichen vor dem Einleiten seiner Ausgabe zunächst noch manuell markiert werden muß.

Aus der US 55 43 818 A ist es bekannt, den ganzen Zeichenvorrat zeilenweise darzustellen und jeweils vier Zeichen zweier aufeinanderfolgender Zeilen zu einem quadratischen Feld zusammenzufassen. An einem zweihändig zu betätigenden Bediengerät wird mittels Cursorschaltern mit der einen Hand eines der Felder und mit der anderen Hand im ausgewählten Feld eines seiner vier Zeichen zur Übergabe etwa an einen Computer ausgewählt. Auch diese Zeichenauswahl kann wiederum nicht "blind", also trotz des Aufwandes zweihändiger Bedienung nicht hinreichend zügig erfolgen, da keine Anfangsposition für den zweischrittigen Auswahlvorgang definierbar ist.

Das gilt entsprechend für die Darstellung des Zeichenvorrats auf konzentrischen Kreisringsektoren gemäß US 54 73 325 A, die beidhändig oder einhändig mittels eines Steuerknüppels pro Hand auszuwählen sind. um die Übergabe des so bestimmten Zeichens auslösen zu können.

Stattdessen haben die blind bedienbaren Elemente der klassischen und insoweit bewährten Schreibmaschienen-Tastatur auch in elektrische und elektronische Dateneingabeeinrichtungen etwa als Tastaturen für Fernschreiber oder für Arbeitsplatzrechner (PCs) Eingang gefunden. Allerdings haben körperlich Behinderte wie etwa unter Multipler Sklerose oder an Spastischer Lähmung Leidende trotz Vorhandenseins aller ihrer Gliedmaßen erhebliche Probleme bei der gezielten Auswahl und Betätigung einer der vielen dicht nebeneinander angeordneten Tasten der Tastatur - oder gar bei dem gezielten Verschieben eines Mauszeigers auf einen bestimmten Punkt in einer Bildschirmdarstellung; und noch größer sind diese Probleme bei querschnittsgelähmten oder amputierten Mitmenschen, die nur noch mit den Lippen gezielte mechanische Bewegungen hervorrufen und deshalb keinesfalls mehr eine Tastatur oder gar eine Maus bedienen können. Es ist andererseits aber sehr anzustreben, diesem Personenkreis über Ausübung einer sinnvollen Tätigkeit wenigstens einen Rest von Lebenswertgefühl vermitteln zu können.

Das liegt als technische Problematik vorliegender Erfindung zugrunde; und diese Aufgabe der zielsicheren und raschen Auswahl eines Zeichens aus einem Zeichenvorrat nicht durch Hochheben der Hand, Ausrichten einer Fingerspitze und Niederfahren auf einen bestimmten Punkt in einer Fläche oder gar durch schwer reproduzierbares manuelles Verschieben eines Mauszeigers über einer Fläche, sondern durch eine leichter beherrschbare kurze Folge von seitlich ausgeübten Druckrichtungen ist erfindungsgemäß dadurch gelöst, daß gemäß den Merkmalsangaben in den beiden Hauptansprüchen die übliche Tastaturbelegung derart auf einem Leuchttableau abgebildet, nämlich derart in einer gruppierten Matrix angeordnet ist, daß im Prinzip, zumal innerhalb einer jeden der Gruppen, schon mit nur zwei richtungsorientierten Schlägen gegen den Steuerstift eines Stellgebers die Anwahl und damit die Übergabe eines bestimmten der auf dem Leuchttableau angegebenen Zeichen bzw. Funktionsumschaltkommandos an ein angeschlossenes Gerät zur weiteren Datenverarbeitung erfolgt.

Dafür ist innerhalb eines Feldes jedes Funktionselement dem einzigen Zentralelement dieses Feldes benachbart. Ein Zentralelement ist also maximal von acht Funktionselementen umgeben; bzw. ein Feld besteht maximal aus neun Elementen, von denen maximal acht sein Zentralelement umgeben. In gleicher Weise besteht eine Gruppe von Feldern aus maximal neun Feldern, von denen maximal acht ein Zentralfeld umgeben. Weiters kann das Tableau maximal neun Gruppen aufweisen, von denen maximal acht eine Zentralgruppe umgeben.

Da nicht nur jedes Element, sondern auch jedes Feld (und letztlich sogar jede Gruppe) eine mehrfach belegte Bedeutung aufweisen kann (wie von der Schreibmaschinentastatur durch die **Shift**-Umschaltungen und zusätzlich bei der Computer-Tastatur durch die **Alt-** und **AltGr**-Umschaltungen geläufig), genügt für eine Abbildung der Computertastatur (und zusätzlicher Steuerungsmöglichkeiten) schon ein Tableau mit zwei Feldergruppen, von denen die eine eine 3x1-Feldmatrix und die andere eine 3x3-Feldmatrix aus jeweils neun Elementen pro Feld ist, bei letztgenannter Matrix mit der üblichen Mehrfachbelegung ihrer alphanumerischen und Satzzeichen-Elemente und mit zusätzlicher Doppelbelegung ihres Zentralfeldes zur Cursorsteuerung - wie unten noch näher ausgeführt wird. Dort wird auch darauf eingegangen, daß eine Umschaltung in eine kontinuierliche "Maus"-Steuerung (etwa zum Linienzeichnen oder zur Auswahl von Bildelementen) über den analog wirkenden Stellgeber möglich ist, dann mit Realisierung der "Klick"-Funktion durch wenigstens einen zusätzlich vorgesehenen Tastschalter. Über eine Mehrfachbetätigung eines solchen ohnehin vorgesehenen Tastschalters läßt sich schließlich auch eine schnelle Funktionsumschaltung parallel zur beschriebenen zweischrittigen Ansprungmöglichkeit des entsprechenden Feldelementes ausführen.

Wesentlich für die bevorzugte grundsätzliche Lösungsvariante ist aber, daß bei unbetätigtem Stelleeber zunächst vom Zentralelement des Zentralfeldes der 3x3-Feldmatrix ausgegangen wird, um in das Zentralelement eines anderen Feldes dieser Gruppe oder in das Zentralelement des Zentralfeldes einer anderen Gruppe zu springen - was durch kurze, entsprechend gerichtete seitliche Druckausübung gegen den danach in seine neutrale Mittenstellung zurückkehrenden, aus dem Stellgeber herausragenden Steuerstift veranlaßt und durch einen entsprechenden Wechsel der Beleuchtung vom Zentralelement des Zentralfeldes zum Zentralelement des angewählten Feldes quittiert wird. Es ist aber auch unschädlich, wenn der Steuerstift nicht wieder losgelassen sondern gleich danach in die nächste Sprungrichtung ausgelenkt wird.

Denn nach dieser ersten gerichteten Eingabe erfolgt die Auswahl des Zeichens innerhalb des so angesprungenen Feldes schon durch eine zweite solche gerichtete Krafteinleitung in den Steuerstift. nämlich im Tableau vom Zentralelement dieses gerade erreichten Feldes aus. Das nun - dem im zweiten Sprung erreichten Element entsprechend - angesprungene Zeichen wird jetzt selbsttätig ausgegeben, und die Leuchtmarke kehrt in ihre Ausgangsposition, also auf das Zentralelement des Zentralfeldes, zurück, ohne daß dafür zusätzliche Eingabeoperationen erforderlich wären.

Sollte das im zweiten Schritt angesprungene Element kein auszugebendes Zeichen zum Gegenstand haben, sondern eine Funktion bewirken, dann wird entweder sogleich diese Funktion ausgelöst; oder es springt die Leuchtmarke zunächst noch im Tableau auf das Zentralelement des dieser Funktion zugeordneten Feldes vor. um dann von hier aus über maximal zwei zusätzliche Eingabesprünge eine weitere Auswahl für die schon vorbereitete Funktion zu treffen und auszulösen.

Im Prinzip jedenfalls, nämlich innerhalb der gerade erreichten Feldgruppe, sind für die gezielte Ausgabe allenfalls zwei aufeinanderfolgende gerichtete Eingaben am Steuerstift erforderlich, so daß nach etwas Übung eine komplette PC-Bedienung nicht nur schnell sondern auch "blind" - und insbesondere jetzt selbst durch Schwerst-Körperbehinderte wie durch Menschen mit zwangsläufig größter aber unkontrollierter Kraftausübung (aufgrund von Spasmus oder Athetosen) ebenso wie durch Menschen mit geringsten Kraftreserven (etwa aufgrund von Muskel-Dystrophie, -Athrophie oder von Rheuma) oder mit geringster verbliebener Beweglichkeit (aufgrund Gliedmaßen-Fehlbildung oder Paraplegie) und auch von Menschen mit unwillkürlich zitternden Bewegungen (wie aufgrund der Parkinsonschen Krankheit) durchführbar ist, die alle bisher von solchen Aktionsmöglichkeiten völlig ausgeschlossen waren. Nach dem Einlemen der Zeichenverteilung auf dem Tableau ist die Bedienung denkbar einfach; denn es handelt sich nicht um ein positionskritischcs Verschieben einer Marke (wie bei der Maus-Steuerung), sondern um eine minimale (im Regelfall nur zweischrittige) Folge von gleichartigen und jeweils nach Art eines Anschlages begrenzten, jeweils in sich abgeschlossenen Betätigungen - ganz entsprechend der herkömmlichen Bewegungsfolge aus Auswahl und Niederdrücken einer Taste auf der Tastatur. Diese Schrittfolge in Form des zweimaligen bloßen richtungsselektiven seitlichen Körperdruckes gegen den Steuerstift, zunächst zum Anspringen eines Auswahlfeldes von einem Ausgangselement her und dann im Auswahlfeld zur Auswahl eines Zeichen-Elementes selbst, läßt sich deshalb leicht und schnell vollziehen und ermöglicht so, wegen dieser einfachen Bewegungsfolge, nach einiger Übung ein reines BlindSchreiben wie auf der Tastatur.

Bezüglich weiterer Vorteile und zusätzlicher Weiterbildungen der erfindungsgemäßen Lösungen wird auf die Unteransprüche verwiesen, und auf nachstehende Beschreibung eines bevorzugten apparativen Realisierungsbeispieles zur Erfindung. In dessen Zeichnung zeigt :
- Fig.1: die Anschaltung eines erfindungsgemäß gestalteten Tastatur-Ersatzes aus Leuchttableau und Stellgeber an einen Computer,
- Fig.2: in abgebrochener Querschnittsdarstellung den Aufbau des Tableaus aus Fig.1 und
- Fig.3: angenähert maßstabsgerecht in Aufsicht die Feldstruktur des Tableaus aus Fig.1 unter gestrichelter Veranschaulichung des Ablaufes verschiedener-Eingabebeispiele.

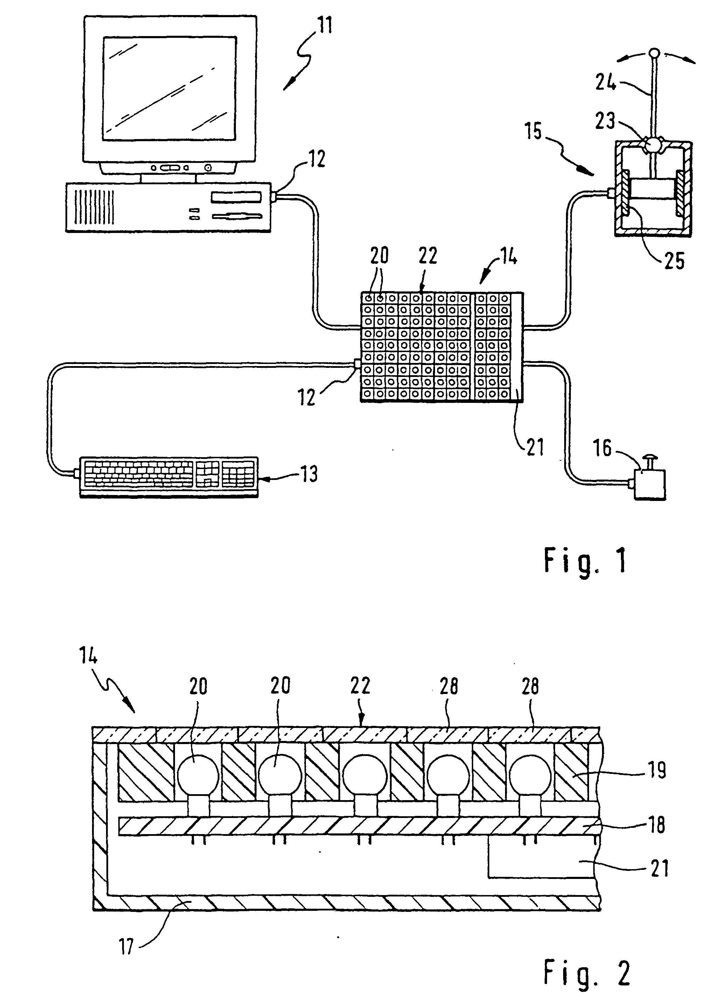

Zur manuellen Eingabe von alphanumerischen Zeichenfolgen (ganz allgemein, nämlich einschließlich der Betätigung von Funktionstasten) z.B. in einen Arbeitsplatzcomputer (PC) 11 wird gemäß Fig.1 an dessen Tastatureingang 12 statt der sonst dafür üblichen Tastatur 13 nun erfindungsgemäß ein flachbauendes Tableau 14 mit vorzugsweise nicht integriertem sondern separatem Stellgeber 15 nach Art eines Joysticks o. dgl. Steuerknüppels angeschlossen. Wenigstens ein zusätzlicher Tastschalter 16 kann in das Tableau 14 oder in das Stellgeber 15 integriert oder wie dargestellt auch separat angeschlossen sein. Ein gleichzeitiger Anschluß der herkömmlichen Tastatur 13 an den Computer 11 ist gewissermaßen durchgeschleift über das Tableau 14 möglich.

Das Tableau 14 ist ein flaches Gehäuse 17, dessen Grundfläche vorzugsweise durch die Größe der in der elektrischen Schaltungstechnik standardisierten Europa-Platine 18 bestimmt ist. Auf der Platine 18 ist (vgl. Fig.2) innerhalb des Gehäuses 17 ein Raster aus miniaturisierten, mittels einer dick auftragenden Lochschablone 19 seitlich gegeneinander abgeschirmten Lämpchen 20 angeordnet, vorzugsweise in der Form von Leuchtdioden.

Statt der selektiv durchstrahlbaren, lokal mit den auswählbaren Zeichen (immer zu lesen : einschließlich Funktionen) versehenen Abdeckung 22 kann auch eine elektrooptische Anzeige eingesetzt werden, etwa ein passives Flüssigkristall- oder ein aktives elektroluminiszentes Display, in welchem das gerade ausgewählte Feld 27 und das darin gerade angesprungene (also aktive) Element 28 durch seine Helligkeit und / oder Einfärbung von der jeweiligen Umgebung abgehoben wird. Das Raster aus Leuchtdioden in einer Lochschablone 19 ist aber preiswerter erstellbar, lokal prägnanter ausleuchtbar und schneller an etwa wechselnde Aufgabenstellungen anpaßbar.

Eine logische Schaltung 21, vorzugsweise realisiert als Mikroprozessor, dient u.a. dem Abfragen der momentanen Betätigung des Stellgebers 15 zum Umsetzen dieser Betätigung in die Ansteuerung eines der Lämpchen 20. Wenn die Rasterkoordinate eines Lämpchens 20 einem alphanumerischen Eingabewert zugeordnet ist, der auf einer translucenten Abdeckung 22 über der Lochschablone 19 durch deren Loch hindurch hinterstrahlt und so visuell kenntlich gemacht wird, dann wird dieser individuelle Wert von der Prozessorschaltung 21 so kodiert an den Computer 11 übertragen und in diesem so verarbeitet, insbesondere auch graphisch auf dem Bildschirm generiert, als würde dieser Wert gerade in herkömmlicher Weise über die Tastatur 13 eingegeben. Die Darstellung der Lämpchen 20 in Fig.1 ist nur symbolisch zu verstehen; tatsächlich sieht der Betrachter der Abdeckung 22 nur diejenige Rasterkoordinate erleuchtet, die mittels des Stellgebers 15 gerade bistabil oder instabil angesteuert ist.

Als Stellgeber 15 kann grundsätzlich jeder taktil betätigbarer Richtungsgeber eingesetzt werden, also etwa auch auslenkbare Steuerknüppel mit schaltendem Ansprechverhalten. In Hinblick darauf, daß der erfindungsgemäße Tastatur-Ersatz aber gerade motorisch Schwerstbehinderten eine Arbeitsmöglichkeit schaffen soll, wird als Stellgeber 15 vorzugsweise ein praktisch weglos ansprechender Vierkoordinaten-Kraftaufnehmer eingesetzt, wie er in der PCT-WO 96/38810 A1 in mehreren Realisierungsvarianten näher beschrieben ist : Ein zweiarmiger Hebel ist an einem Wälzlager 23 im indifferentem Gleichgewicht aufgehängt und liegt dem hervorragenden Steuerstift 24 gegenüber ständig gegen Druckaufnehmer 25 an, deren aktuelle Beanspruchung in der Schaltung 21 über potentialgesteuerte Kippstufen (Schmitt-Trigger) unstetig oder über Verstärker stetig ausgewertet wird. Der Steuerstift 24 kann für Betätigung mit den Extremitäten aus einer tischförmigen Unterlage hervorragen oder über einer Unterlage hängen (DE 1 96 47 149 A); und der Steuerstift 24 kann auch mit wenigstens einem zusätzlichen Tastschalter 16 ausgestattet bzw. etwa horizontal gehaltert sein, um ihn mit dem Mund zu betätigen (EP 854 437 A).

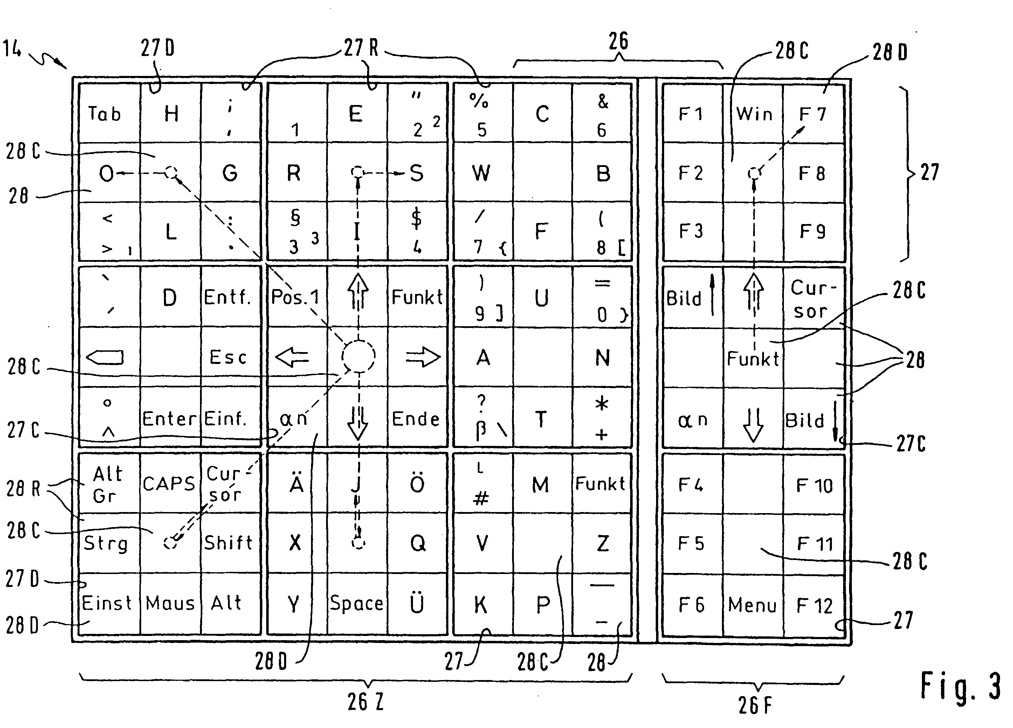

Der erfindungsgemäße Tastatur-Ersatz ist, wie sich aus Fig.3 ergibt, derart ausgelegt, daß praktisch die gesamte Tastenanordnung der herkömmlichen Tastatur - ohne weitere Hintergrundebenen zu benötigen - auf das Tableau 14 abgebildet ist, in welchem der herkömmliche Tastenanschlag durch zweimalige Betätigung (Querkrafteinwirkung) des Steuerstiftes 24 ersetzt ist. Im Gegensatz zum richtungsmäßig nicht definierten, freien Antahren bestimmter Koordinaten in einer graphisch dargestellten Tabelle mit einer Schreibmarke mittels einer Maus o.dgl. ermöglicht die erfindungsgemäße Lösung deshalb nach Einlernen der Zeichenlage ein Blindschreiben und somit eine rasche Eingabe auch durch Personen, die krankheitsbedingt eine herkömmliche Tastatur nicht bedienen können.

Wie in Fig.3 skizziert, ist die Darstellung auf dem Tableau 14 in zwei Gruppen 26 unterteilt, eine quadratische Zeichen-Gruppe 26Z und eine gestreckte Funktionen-Gruppe 26F. Jede Gruppe 26 besteht in diesem Realisierungsbeispiel aus mehreren quadratischen Feldem 27 mit je neun Elementen 28.

In der Funktionen-Gruppe 26F sind in den beiden äußeren Reihen die Funktionselemente der herkömmlichen Funktionstasten F1 ... F12 angeordnet, und dazwischen wie dargestellt Aufrufe zu Windows- und zu Menu-Programmen, Bildläufe sowie Übergänge zur Cursor- und zur alphanumerischen Eingabe. Letztere erfolgt in der Standard-Arbeitsfläche. Hier ist ein zentrales Steuerfeld 27C von einem Ring von Feldern 27R umgeben, auf welche - jeweils um ein neutrales (bedeutungsfreies) Zentralelement 28C herum - die alphanumerischen Zeichensätze verteilt sind, kombiniert wie auf der herkömmlichen Tastatur und verteilt nach Maßgabe der Häufigkeit ihres Auftretens in Texten; sowie (im Ecken- oder Diagonalfeld 27D links unten in der Darstellung) einige Funktions-Umschaltvorgänge.

Im Start- und im Ruhezustand des Systems und bei momentan entlastetem Stellgeber 15 ist das zentrale Element 28C im Zentralfeld 27C aktiv, d.h. durch Hinterleuchtung mittels eines Lämpchens 20 (Fig.2). durch seine Grundhelligkeit oder durch einen Farbwechsel von der Umgebung visuell abgehoben. Die Beschriftung des Zentralfeldes 27C ist momentan irrelevant, denn die erste Betätigung des Steuerstiftes 24 führt nur zum Übergang in das neutrale Zentrum 28C eines der umliegenden Ringfelder 27R; so ein beliebig kurzer Druck gegen den Steuerstift 24 nach vorne in das obere Ringfeld 27R (mit u.a. dem Buchstaben S) oder ein kurzer Druck nach rückwärts in das untere Ringfeld 27R (mit u.a. dem Buchstaben J). Die daraufhin erfolgende, also jeweils zweite Betätigungsrichtung am Steuerstift 24 bewirkt schon die endgültige Auswahl eines Elementes 28 vom neutralen Zentralelement 28C des gerade erreichten Ringfeldes 27R aus, also aus der oberen Position nach rechts das Aufleuchten des S oder aus der unteren Position nach oben das Aufleuchten des J. Die Verschlüsselung und Übergabe gerade dieses jeweiligen Zeichens an den Computer 11 (mit gleichzeitiger Rückführung des Eingabesystems auf das zentrale Element 28C im zentralen Feld 27C) wird von der prozessorprogrammierten Eingabeschaltung 21 bewirkt, sobald der extern auf den Steuerstift 24 ausgeübte zweite Druck wieder abfällt - spätestens jedoch, wenn die zweite Druckrichtung am Steuerstift 24 bereits über eine vorgegebene Zeitspanne hinweg ansteht.

In gleicher Weise sind auch die Elemente 28 in den Eckfeldern 28D der Ringfelder 27R mit nur zwei Eingabe-Druckrichtungen zu erreichen, indem der Steuerstift 24 vom zentralen Element 28C des Zentralfeldes 27C aus z.B. zunächst schräg nach links voraus gedrückt wird, um auf das neutrale Zentralelement 28C im Feld 27R oben links zu springen; woraufhin ein kurzer Druck nach links die Eingabe des Buchstaben O auslöst.

Bei wegbehafteter Betätigung es Steuerstiftes 24 ist es zweckmäßig, eine Kulissenführung vorzusehen, die jeweils aus der neutralen Ruhe- oder Mittelstellung heraus nur die beiden zueinander orthogonalen und die beiden dazu diagonalen Eingaberichtungen zuläßt. Eine solche mechanische Zwangsführung ist bei den hier, da behindertengerechter, bevorzugten weglosen Stellgebern 15 nicht wirksam; sie wäre auch unzweckmäßig, weil man für den Wechsel zur nächsten Sprungrichtung erst in die Ruhestellung zurückkehren müßte. Stattdessen ist es vorteilhaft, durch die Abfrage der Sensoren (Druckaufnehmer 25) mittels der Schaltung 21 vorzugeben, in welchem Überlappungsbereich gleichzeitiger Beanspruchung zweier orthogonaler Druckaufnehmer 25 die Eingabe nicht mehr als "entweder X- oder Y-Richtung", sondern als "diagonal" weiterverarbeitet wird; um auch in der Diagonalenrichtung, also vom Zentrum 28C des Zentralfeldes 27C aus zu den Eckfeldern 27D der Ringfelder 27R hin, mit der ersten Betätigung des Stellstiftes 24 mittig (28C) in das gewünschte Feld 27 zu springen und sodann wieder schon mit der zweiten Betätigung, von dessem Zentrum 28C aus, ein gewünschtes der das Zentrum 28C dieses Feldes 27 umgebenden Zeichenelemente anzuwählen.

Für den Fall jedoch, daß die an sich gerade gewünschte Diagonalenrichtung bei der Belastung des Steuerstiftes 27 nicht unmittelbar getroffen sondern ungewollt ein benachbartes Element 28 angesteuert wird, braucht der Vorgang nicht erst durch Rückkehr zum Zentralelement 28C aufgehoben zu werden; es ist dann vielmehr gewissermaßen ein Zwischenschritt möglich, indem die nächste orthogonale Betätigungsrichtung von der mittleren Position einer Reihe zur benachbarten Eckposition führt, also zum Sprung in ein Eckfeld 27D oder in diesem zur Auswahl eines Eckelementes 28D. So kann man sogar durch kreisende Bewegung des Steuerstiftes 24 dann ohne Rückkehr auf das Zentralelement 28C den Kreis der äußeren, die Zentralposition 28C umgebenden Elemente 28 eines Feldes 27 abfahren und dann zur Zeichenausgabe auf einem Element 28 stehenbleiben.

Die Ansteuerung der im linken unteren Ringfeld 27D enthaltenen besonderen, nämlich bistabil wirkenden Elemente **AltGr, Alt, Strg** und **Shift** bewirkt, daß diese bis zur Anwahl des nächsten Zeichenelementes aktiv (und unterscheidbar von den anderen z.B. blinkend hellgesteuert) bleiben, das Element **CAPS** sogar bis zu seiner nächsten Anwahl. **Einst** ruft ein separates Programm zur parametrischen Anpassung dieses Stellgebers 15 an andere Aufgaben wie insbesondere zur Steuerung von Krankenfahrstühlen auf.

Die Ansteuerung des im linken unteren Ringfeld 27D enthaltenen, ebenfalls bistabil wirkenden Elementes **Maus** aktiviert einen Mauszeiger-Betriebsmodus, bei welchem die Folge der Druckrichtungswechsel und der Druckstärken die Bewegungsrichtung und deren Geschwindigkeit eines Mauszeigers auf dem Bildschirm des Computers 11 bestimmen. In dieser Betriebsart kann also mittels des Stellgebers 15 gezeichnet oder eine Auswahl zwischen Windows-Icons getroffen werden; wobei für die Übernahme durch Eingabe-Click der Tastschalter 16 (Fig.1) betätigt wird.

De Auswahl des bistabilen Elementes **Cursor** schaltet die Wirkung und eine optische Kennzeichnung des Zentralfeldes 27C um. Dieses wird nun - beispielsweise durch eine flächige Beleuchtung oder einfach durch Lämpchen an seinen äußeren Eckpunkten (in der Skizze nicht dargestellt) - visuell vom umgebenden Ringfeld 27R unterschieden, um auszudrücken, daß jetzt vom Zentralelement 28C aus kein Sprung in eines der umgebenden Felder 27 mehr stattfindet. Vielmehr bewirkt eine Betätigung des Steuerstiftes 24 nun ein schrittweises Wandern der Schreibmarke auf dem Bildschirm des Computers 11, wie bei Betätigung der vier Cursortasten einer regulären Tastatur, bzw. den Cursorsprung in eine Anfangs- oder in eine Endposition.

Das Diagonal- oder Ecken-Element 28D links unten im Zentralfeld 27C hebt die bistabile **Cursor**-Einschaltung wieder auf, führt also auf den vorstehend beschriebenen Normalbetrieb der Eingabe alphanumerischer Zeichen zurück.

Eine Auswahl des Elementes **Funkt**ion (im Cursorbetrieb 28D oben rechts des Zentralfeldes 27C, oder im alphanumerischen Betrieb 28D oben rechts des Feldes 27D unten rechts führt zum Übergang in das Zentrum einer weiteren Gruppe 26F. Die kann wie die bisher betrachtete auch wieder aus einem - womöglich auch wieder funktionsumschaltbaren - Zentralfeld 27C mit umgebenden Ringfeldern 27R realisiert sein, was aber zusätzliche Eingabemöglichkeiten in einer solchen Vielzahl eröffnet, wie sie als Tastatur-Ersatz gar nicht notwendig ist. Dort sind im vorliegenden Ausführungsbeispiel deshalb nur noch die üblichen zwölf PC-**F**unktionstasten und die beiden **Bild**-Scroll-Tasten vorgesehen, sowie zwei alternative Programmaufrufe (**Win**dows und **Menue**) und je ein Element 28D zum direkten Rücksprung in den Cursor- oder in den alphanumerischen Betrieb der anderen Gruppe 26Z. Die übrigen Elemente 28 der Gruppe 26F sind nicht belegt, sie stehen für wahlfreie Sonderfunktionen zur Verfügung.

Die Tastatur-Abbildung auf einem Tableau 14 gemäß Fig.3 läßt sich im Rahmen vorliegender Erfindung grundsätzlich auch softwaregesteuert auf einem Bildschirm, in das aktuell zu erstellende Dokument integriert, darstellen, dann mit Elementenauswahl zur Zeicheneingabe etwa über einen an den PC-Gameport angeschlossenen Joystick. Nachteilig ist aber, daß dann für jeden Anwendungsfall eigens eine Softwareanpassung erforderlich wäre. Aus anwendungsorientierter Sicht zweckmäßiger ist deshalb die vorstehend beschriebene hardwaretechnische Lösung, die den Einsatz im einfachen Austausch gegen die übliche an den Computer 11 angeschlossene Tastatur 13 ohne weitere Eingriffe in das gerade gegebene Betriebs- oder Anwenderprogramm ermöglicht.

Jedenfalls wird es durch die Erfindung auch Schwerst-Körperbehinderten ermöglicht. eine rasche, quasi "blinde" Eingabe von Zeichen etwa in einen Computer 11 durchzuführen. indem dessen herkömmliche Tastatur 13 ersetzt wird durch eine Zeichenabbildung auf einem matrixförmig unterteilten Tableau 14 mit der Betätigungsrichtung eines Stellgeber-Steuerstiftes 24 entsprechend springender Ausleuchtung. Auf dem Tableau 14 sind jeweils maximal acht Eingabeelemente 28R ein Zentralelement 28C umgebend zu Feldern 27 aus dann 3x3 Elementen 28 gruppiert; und maximal acht solcher Felder 27R wiederum ergeben eine Gruppe 26 von dann 3x3 Feldern 27, die ein zentrales Feld 28C umgeben. Diese Anordnung ermöglicht es, grundsätzlich mit einer Folge von nur zwei zueinander orthogonalen oder diagonalen Richtungsschlägen gegen den bevorzugt weglos arbeitenden Stellgeber 15 das auszugebende Zeichen (oder eine auszuführende Funktion) anzuspringen, nämlich zunächst mit der ersten Druckrichtung vom neutralen Zentrum 27C/28C der Felder 27 her das neutrale Zentrum 28C eines der anderen Felder 27R und darin dann von seinem neutralen Zentrum 28C aus mit der zweiten Druckrichtung ein Element 28 aus den maximal acht dieses Zentrum 28C umgebenden Elementen 28R auszuwählen. Mit diesem Aufruf und der Ausgabe des letztlich so angewählten Elementes 28 (Zeichen oder Funktion) springt das System für den nächsten Auswahlvorgang in die Ausgangslage, also auf das Zentralelement 28C des Zentralfeldes 27C zurück. Allgemein gesprochen wird also von einem Ausgangsfeld her zunächst in vorgebbarer Richtung ein ihm benachbartes Auswahlfeld angesprungen und darin dann im zweiten Eingabeschritt das Zeichen-Ausgabeelement angewählt.

## Patentansprüche

1. Verfahren zur Übergabe von aus einem vorgegebenen Zeichenvorrat auswählbaren Zeichen insbesondere an einen Computer,
wobei der Zeichenvorrat die Zeichen einer herkömmlichen Tastaturbelegung und Steuerzeichen umfaßt und diese Zeichen als Elemente (28) auf einer Anzeigefläche in mehrere Felder (27) aufgeteilt dargestellt sind
und wobei die Elemente (28) mittels einer durch einen Stellgeber (15) bewegten Markierung auf der Anzeigefläche ausgewählt werden, ehe anschließend jeweils die Übergabe des dadurch ausgewählten Zeichens ausgelöst wird,
**dadurch gekennzeichnet,**
**daß** die Felder (27) jeweils ein Zentralelement (28C) und daneben angeordnete weitere Elemente (28; 28D, 28R, ...) enthalten,
**daß** eines der Felder (27) als Zentralfeld (27C) vorgesehen ist, neben welchem weitere Felder (27; 27D, 27R, ...) angeordnet sind,
**daß** die Auswahl eines Zeichens derart erfolgt, daß die Markierung - jeweils in vom Stellgeber (15) vorgegebener Richtung - zunächst vom Zentralelement (28C) des Zentralfeldes (27C) auf ein Zentralelement (28C) eines benachbarten Feldes (27; 27D, 27R, ...) und unmittelbar danach auf ein dem Zentralelement (28C) dieses benachbarten Feldes (27) seinerseits benachbartes Element (28) bewegt wird,
und **daß** die Übergabe des zuletzt angesprungenen Zeichens bewirkt wird, sobald der im zweiten Schritt extern auf den Stellgeber ausgeübte Druck wieder abfällt, spätestens jedoch wenn die zweite Druckrichtung bereits über eine vorgegebene Zeitspanne hinweg ansteht,
womit die Markierung selbsttätig in das Zentralelement (28C) des Zentralfeldes (27C) zurückspringt.

2. Verfahren nach Anspruch 1,
**dadurch gekennzeichnet,**
**daß** nur zueinander orthogonale und diagonale Sprungrichtungen zugelassen sind.

3. Verfahren nach Anspruch 1 oder 2,
**dadurch gekennzeichnet,**
**daß** der Diagonalsprung aus einer Folge zweier zueinander orthogonaler Eingaben erzeugt wird.

4. Verfahren nach einem der vorangehenden Ansprüche,
**dadurch gekennzeichnet,**
**daß** je nach der Belegung eines äußeren Elementes vom Zentralelement eines Feldes aus - statt der Übergabe eines Zeichens - in das Zentralelement eines diesem Feld benachbarten Feldes oder in das Zentralelement des Zentralfeldes dieser Gruppe von Feldern oder einer benachbarten Gruppe von Feldern gesprungen wird.

5. Eingabevorrichtung mit Stellgeber (15) und Schaltung (21) zur Übergabe von aus einem vorgegebenen Zeichenvorrat auswählbaren Zeichen insbesondere an einen Computer,
wobei der Zeichenvorrat die Zeichen einer herkömmlichen Tastaturbelegung und Steuerzeichen umfaßt und diese Zeichen als Elemente (28) auf einer Anzeigefläche in mehrere Felder (27) aufgeteilt dargestellt sind
und wobei die Elemente (28) mittels einer durch einen Stellgeber (15) bewegbaren Markierung auf der Anzeigefläche auswählbar sind, ehe anschließend jeweils die Übergabe des dadurch ausgewählten Zeichens ausgelöst wird,
**dadurch gekennzeichnet,**
**daß** die Felder (27) jeweils ein Zentralelement (28C) und daneben angeordnete weitere Elemente (28; 28D, 28R, ...) enthalten,
**daß** eines der Felder (27) als Zentralfeld (27C) vorgesehen ist, neben welchem weitere Felder (27; 27D, 27R, ...) angeordnet sind,
**daß** die Auswahl eines Zeichens dadurch erfolgt, daß die Markierung -jeweils in vom Stellgeber (15) vorgegebener Richtung - zunächst vom Zentralelement (28C) des Zentralfeldes (27C) auf ein Zentralelement (28C) eines benachbarten Feldes (27; 27D, 27R, ...) und unmittelbar danach auf ein dem Zentralelement (28C) dieses benachbarten Feldes (27) seinerseits benachbartes Element (28) bewegbar ist,
und **daß** die Schaltung (21) die Übergabe des zuletzt angesprungenen Zeichens bewirkt, sobald der im zweiten Schritt extern auf den Stellgeber (15) ausgeübte Druck wieder abfällt, spätestens jedoch wenn die zweite Druckrichtung bereits über eine vorgegebene Zeitspanne hinweg ansteht,
womit die Markierung selbsttätig in das Zentralelement (28C) des Zentralfeldes (27C) zurückspringt.

6. Eingabevorrichtung nach Anspruch 5,
**dadurch gekennzeichnet,**
**daß** die Schaltung (21) nur zueinander orthogonale und diagonale Eingaberichtungen am Stellgeber (15) in Sprünge in das ggf. benachbarte Element (28) bzw. in das Zentralelement (28C) des in dieser Richtung ggf. benachbarten Feldes (27) umsetzt.

7. Eingabevorrichtung nach Anspruch 6,
**dadurch gekennzeichnet,**
**daß** die Schaltung (21) eine nicht eindeutige Diagonal-Eingabe am Stellgeber (15) in eine Orthogonal-Ansteuerung umsetzt und dann eine weitere Orthogonal-Eingabe für den Sprung in das Zentralelement (28C) eines dem Zentralfeld (27C) diagonal benachbarten Feldes (27D) oder innerhalb eines Feldes (27) in eines seiner Diagonal-Elemente (28D) zuläßt.

8. Eingabevorrichtung nach einem der Ansprüche 5 bis 7,
**dadurch gekennzeichnet,**
**daß** die an den Stellgeber (15) angeschlossene Schaltung (21) in einem Gehäuse (17) angeordnet ist, das auf seiner lokal beleuchtbaren Abdeckung (22) die zu Feldern (27) zusammengefaßten Elemente (28) darbietet und anstelle einer herkömmlichen Tastatur (19) an den Tastatureingang (12) eines Computers (11) anschließbar ist.

9. Eingabevorrichtung nach Anspruch 8,
**dadurch gekennzeichnet,**
**daß** das Gehäuse (17) seinerseits mit einem Tastatureingang (12) ausgestattet ist.

10. Eingabevorrichtung nach einem der Ansprüche 5 bis 9,
**dadurch gekennzeichnet,**
**daß** der Zeichensatz einer herkömmlichen Computer-Tastatur (13) in einer matrixförmigen Gruppe (26Z) von 3x3 Feldern (27) auf deren jeweils um ein Zentralelement (28C) herum angeordneten Elementen (28), zuzüglich einer weiteren matrixförmigen Gruppe (26F) von 3x1 Feldern (27) für Funktionstasten, abgebildet ist.

## Claims

1. Method for transferring characters which can be selected from a prescribed character set to a computer, in particular,
where the character set comprises the characters in a conventional keyboard assignment and control characters, and these characters are shown, having been split into a plurality of fields (27), as elements (28) on a display panel,
and where the elements (28) are selected on the display panel using a marker which is moved by an actuator (15), prior to subsequent initiation of the respective transfer of the character selected as a result,
**characterized**
**in that** the fields (27) respectively contain a central element (28C) and further elements (28; 28D, 28R, ...) arranged next to it,
**in that** one of the fields (27) is provided as a central field (27C) next to which further fields (27; 27D, 27R, ...) are arranged,
**in that** a character is selected by moving the marker - in each case in a direction prescribed by the actuator (15) - first from the central element (28C) in the central field (27C) to a central element (28C) in an adjacent field (27; 27D; 27R, ...) and immediately thereafter to an element (28) which for its part is adjacent to the central element (28C) in this adjacent field (27),
and **in that** transfer of the last character preselected is prompted as soon as the pressure exerted externally on the actuator in the second step drops again, but no later than when the second direction of pressure has already been present beyond a prescribed length of time, whereupon the marker automatically returns to the central element (28C) in the central field (27C).

2. Method according to Claim 1,
**characterized**
**in that** only directions of movement which are at right angles to one another or diagonal are permitted.

3. Method according to Claim 1 or 2,
**characterized**
**in that** the diagonal movement is produced from a sequence of two inputs at right angles to one another.

4. Method according to one of the preceding claims,
**characterized**
**in that**, depending on the assignment for an external element, the central element in a field is left - instead of transfer of a character - for the central element in a field which is adjacent to this field or for the central element in the central field in this group of fields or in an adjacent group of fields.

5. Input apparatus having an actuator (15) and a circuit (21) for transferring characters which can be selected from a prescribed character set to a computer, in particular,
where the character set comprises the characters in a conventional keyboard assignment and control characters, and these characters are shown, having been split into a plurality of fields (27), as elements (28) on a display panel,
and where the elements (28) can be selected on the display panel using a marker which can be moved by an actuator (15), prior to subsequent initiation of the respective transfer of the character selected as a result,
**characterized**
**in that** the fields (27) respectively contain a central element (28C) and further elements (28; 28D, 28R, ...) arranged next to it,
**in that** one of the fields (27) is provided as a central field (27C) next to which further fields (27; 27D, 27R, ...) are arranged,
**in that** a character is selected by virtue of the marker being able to be moved - in each case in a direction prescribed by the actuator (15) - first from the central element (28C) in the central field (27C) to a central element (28C) in an adjacent field (27; 27D; 27R, ...) and immediately thereafter to an element (28) which for its part is adjacent to the central element (28C) in this adjacent field (27),
and **in that** the circuit (21) prompts transfer of the last character preselected as soon as the pressure exerted externally on the actuator (15) in the second step drops again, but no later than when the second direction of pressure has already been present beyond a prescribed length of time,
whereupon the marker automatically returns to the central element (28C) in the central field (27C).

6. Input apparatus according to Claim 5,
**characterized**
**in that** the circuit (21) converts only input directions on the actuator (15) which are at right angles to one another or diagonal into movements to the possibly adjacent element (28) or to the central element (28C) in the field (27) which is possibly adjacent in this direction.

7. Input apparatus according to Claim 6,
**characterized**
**in that** the circuit (21) converts an indistinct diagonal input on the actuator (15) into right-angled actuation and then permits further right-angled input for the movement to the central element (28C) in a field (27D) which is diagonally adjacent to the central field (27C) or within a field (27) in one of its diagonal elements (28D).

8. Input apparatus according to one of Claims 5 to 7,
**characterized**
**in that** the circuit (21) connected to the actuator (15) is arranged in a housing (17) whose locally illuminable cover (22) presents the elements (28) combined into fields (27) and which can be connected to the keyboard input (12) on a computer (11) instead of a conventional keyboard (19).

9. Input apparatus according to Claim 8,
**characterized**
**in that** the housing (17) is for its part equipped with a keyboard input (12).

10. Input apparatus according to one of Claims 5 to 9,
**characterized**
**in that** the character set on a conventional computer keyboard (13) is depicted in a matrix-like group (26Z) of 3x3 fields (27) on the latter's elements (28) respectively arranged around a central element (28C), plus a further matrix-like group (26F) of 3x1 fields (27) for function keys.

## Revendications

1. Procédé pour le transfert de caractères sélectionnables dans une réserve de caractères prédéfinie notamment vers un ordinateur,
avec lequel la réserve de caractères comprend les caractères d'un clavier courant et des caractères de contrôle et ces caractères sont représentés sous la forme d'éléments (28) répartis en plusieurs champs (27) sur une surface d'affichage
et avec lequel les éléments (28) sont sélectionnés sur la surface d'affichage au moyen d'un marquage déplacé par un détecteur de position (15), avant que le transfert du caractère ainsi sélectionné soit ensuite à chaque fois déclenché,
**caractérisé en ce**
**que** les champs (27) comprennent à chaque fois un élément central (28C) et d'autres éléments (28 ; 28D, 28R, ...) disposés à côté,
**que** l'un des champs (27) est prévu comme champ central (27C) à côté duquel sont disposés d'autres champs (27 ; 27D, 27R, ...),
**que** la sélection d'un caractère s'effectue de telle manière que le marquage, à chaque fois dans la direction prédéfinie par le détecteur de position (15), soit déplacé tout d'abord de l'élément central (28C) du champ central (27C) sur un élément central (28C) d'un champ voisin (27 ; 27D, 27R, ...) et immédiatement après sur un élément (28) voisin à son tour de l'élément central (28C) de ce champ voisin (27),
et **que** le transfert du dernier caractère sélectionné est effectué dès que la pression exercée depuis l'extérieur au cours de la deuxième étape sur le détecteur de position chute de nouveau, au plus tard cependant lorsque le deuxième sens de pression est déjà maintenu pendant une durée prédéfinie,
le marquage retournant alors automatiquement dans l'élément central (28C) du champ central (27C).

2. Procédé selon la revendication 1, **caractérisé en ce que** seules sont autorisées des directions de saut orthogonales et diagonales les unes par rapport aux autres.

3. Procédé selon la revendication 1 ou 2, **caractérisé en ce que** le saut en diagonale est produit à partir d'une série de deux saisies orthogonales l'une par rapport à l'autre.

4. Procédé selon l'une des revendications précédentes, **caractérisé en ce que**, suivant l'affectation d'un élément externe de l'élément central d'un champ, au lieu du transfert d'un caractère, il se produit un saut dans l'élément central d'un champ voisin de ce champ ou dans l'élément central du champ central de ce groupe de champs ou d'un groupe de champs voisin.

5. Dispositif de saisie comprenant un détecteur de position (15) et un circuit (21) pour le transfert de caractères sélectionnables dans une réserve de caractères prédéfinie notamment vers un ordinateur,
avec lequel la réserve de caractères comprend les caractères d'un clavier courant et des caractères de contrôle et ces caractères sont représentés sous la forme d'éléments (28) répartis en plusieurs champs (27) sur une surface d'affichage
et avec lequel les éléments (28) peuvent être sélectionnés sur la surface d'affichage au moyen d'un marquage pouvant être déplacé par un détecteur de position (15), avant que le transfert du caractère ainsi sélectionné soit ensuite à chaque fois déclenché,
**caractérisé en ce que** les champs (27) comprennent à chaque fois un élément central (28C) et d'autres éléments (28 ; 28D, 28R, ...) disposés à côté,
que l'un des champs (27) est prévu comme champ central (27C) à côté duquel sont disposés d'autres champs (27 ; 27D, 27R, ...),
que la sélection d'un caractère s'effectue de telle manière que le marquage, à chaque fois dans la direction prédéfinie par le détecteur de position (15), soit déplacé tout d'abord de l'élément central (28C) du champ central (27C) sur un élément central (28C) d'un champ voisin (27 ; 27D, 27R, ...) et immédiatement après sur un élément (28) voisin à son tour de l'élément central (28C) de ce champ voisin (27),
et que le circuit (21) effectue le transfert du dernier caractère sélectionné dès que la pression exercée depuis l'extérieur au cours de la deuxième étape sur le détecteur de position (15) chute de nouveau, au plus tard cependant lorsque le deuxième sens de pression est déjà maintenu pendant une durée prédéfinie,
le marquage retournant alors automatiquement dans l'élément central (28C) du champ central (27C).

6. Dispositif de saisie selon la revendication 5, **caractérisé en ce que** le circuit (21) convertit uniquement les sens de saisie orthogonaux et diagonaux l'un par rapport à l'autre sur le détecteur de position (15) en sauts dans l'élément (28) éventuellement voisin ou dans l'élément central (28C) du champ (27) éventuellement voisin dans cette direction.

7. Dispositif de saisie selon la revendication 6, **caractérisé en ce que** le circuit (21) convertit une saisie non explicitement diagonale au niveau du détecteur de position (15) en une commande orthogonale et autorise ensuite une saisie orthogonale supplémentaire pour le saut dans l'élément central (28C) d'un champ (27D) voisin diagonalement du champ central (27C) ou à l'intérieur d'un champ (27) dans l'un de ses éléments diagonaux (28D).

8. Dispositif de saisie selon l'une des revendications 5 à 7, **caractérisé en ce que** le circuit (21) raccordé au détecteur de position (15) est logé dans un boîtier qui, sur son couvercle (22) pouvant être éclairé localement, présente les éléments (28) regroupés en champs (27) et peut être raccordé à l'entrée clavier (12) d'un ordinateur (11) à la place d'un clavier courant (19).

9. Dispositif de saisie selon la revendication 8, **caractérisé en ce que** le boîtier (17) est de son côté équipé d'une entrée clavier (12).

10. Dispositif de saisie selon l'une des revendications 5 à 9, **caractérisé en ce que** le jeu de caractères d'un clavier d'ordinateur courant (13) est représenté dans un groupe matriciel (26Z) de 3x3 champs (27) sur ses éléments (28) à chaque fois disposés autour d'un élément central (28C), plus un groupe matriciel (26F) supplémentaire de 3x1 champs (27) pour les touches de fonction.
